# DEMANDE DE BREVET EUROPEEN

(11) **EP 3 923 542 A1**
(43) Date de publication de la demande: **15.12.2021**
(21) Numéro de dépôt: 21175507.9
(22) Date de dépôt: 24.05.2021
(51) Int. Cl.: H04L 29/06, H04L 9/32, H04W 12/06, H04W 12/069, G06F 21/33

(54) **DISPOSITIF INFORMATIQUE ET PROCÉDÉ POUR L'AUTHENTIFICATION D'UN UTILISATEUR**

(30) Priorité: 08.06.2020 FR 2005977
(71) Demandeur: Evidian, 78340 Les Clayes Sous Bois (FR)
(72) Inventeur: GUIONNEAU, Christophe, 38000 Grenoble (FR)
(74) Mandataire: IPAZ

(57) **Abrégé**

L'invention concerne un dispositif et un procédé d'authentification d'un utilisateur utilisant un client d'accès à internet (10) pour accéder à des ressources distantes d'une infrastructure informatique, ledit accès comprenant :
- une première authentification (130) du client d'accès à internet (10),
∘ Un envoi (132) à un module de sécurité à jeton (21), par le client d'accès à internet (10), d'un certificat client (220), ledit certificat client (220) étant associé à des informations d'identification du client d'accès à internet (10) ;
∘ Une réception (133), par le client d'accès à internet (10), d'un jeton d'authentification (210) généré par le module de sécurité à jeton lorsque le certificat client (220) envoyé a été vérifié par le module de sécurité à jeton ; et

- une seconde authentification (140) de l'utilisateur du client d'accès à internet (10).

## Description

L'invention s'intéresse au domaine de la sécurité informatique, et plus particulièrement de l'authentification, pouvant être utilisée notamment pour accéder à des ressources informatiques distantes. L'invention concerne un procédé d'authentification d'un utilisateur utilisant un client d'accès à internet, ledit procédé permettant à l'utilisateur d'accéder à des ressources distantes d'une infrastructure informatique (e.g. serveur informatique). L'invention concerne en outre un dispositif configuré pour l'authentification d'un utilisateur pour accéder à des ressources distantes d'une infrastructure informatique (e.g. serveur informatique).

### Art antérieur

La protection de l'accès aux applications ou aux systèmes en réseau est un problème bien connu dans une grande variété de contextes. En particulier, les entreprises utilisent de plus en plus d'applications métiers qui sont accessibles au travers de n'importe quel navigateur Web. Ces applications peuvent être hébergées dans le Cloud en tant qu'applications comme service (« Software as a Service » en terminologie anglosaxonne) ou sur les serveurs de l'entreprise, en utilisant l'infrastructure informatique de l'entreprise.

Un utilisateur souhaitant se connecter à ces applications métiers doit généralement s'authentifier avant d'avoir accès au contenu. Par exemple, lorsqu'un utilisateur accède à une application cloud, il peut le faire depuis l'intérieur du réseau de l'entreprise, ou en mobilité depuis chez lui ou depuis n'importe quel point d'accès Internet. Ainsi, dans certains cas, à partir du moment où un utilisateur dispose d'un moyen d'authentification approprié, cette authentification peut être réalisée depuis n'importe où et à partir de n'importe quel dispositif informatique. Dans ce contexte, il est courant qu'une application informatique demande aux utilisateurs de fournir un nom d'utilisateur et un mot de passe.

Néanmoins, de façon à limiter les problèmes de sécurité et pour continuer à maitriser les authentifications vers les applications Cloud, des entreprises fournissent à chaque employé un ordinateur entièrement géré par l'entreprise grâce à un MDM (« Mobile Device Management » en terminologie anglosaxonne). L'ordinateur est ainsi entièrement soumis aux règles de sécurité de l'entreprise, les logiciels sont installés à distance, les communications passent par un réseau privé (« Virtual Private Network » en terminologie anglosaxonne). Le principe du BYOD (« Bring your Own device » en terminologie anglosaxonne) n'est pas possible. Les MDMs sont des équipements d'infrastructure réseau de l'entreprise dont la gestion doit être confiée à des spécialistes. Les MDMs sont souvent couteux et leur usage est contraignant pour les utilisateurs.

En outre, pour améliorer la sécurité et fournir des mécanismes d'authentification plus fiables, diverses techniques cryptographiques ont été développées. Par exemple, les techniques d'infrastructure à clé publique (PKI - « Public Key Infrastructure » en terminologie anglosaxonne) sont utilisées pour créer, distribuer et gérer les clés cryptographiques utilisées pour contrôler l'accès à une application. Par exemple, il a été divulgué des procédés d'accès à un réseau associé à un périphérique d'accès au réseau comportant l'envoi d'informations d'identification d'un utilisateur associé au périphérique client via un certificat de session pour s'authentifier auprès du périphérique d'accès au réseau (US9166969). Dans ce cas, le certificat de session et la clé sont associés aux informations d'identification de l'utilisateur. Cependant, les approches PKI sont souvent perçues comme extrêmement difficiles à déployer et à utiliser, et cette notion est devenue un élément dissuasif pour l'adoption de cette technologie.

De plus, lorsqu'elles sont basées sur des certificats, les approches PKI limitent les approches de type « prenez vos appareils personnels » (BYOD pour « bring your own device » en terminologie anglosaxonne). Par exemple, un utilisateur peut avoir besoin d'accéder à ces certificats à partir de différents appareils informatiques, mais un certificat installé sur un ordinateur ne peut pas être utilisé à partir d'autres appareils sans copier la clé privée sur chaque appareil. Cela empêche l'accès "à la demande de n'importe où" souhaité pour certaines applications. L'installation d'un certificat (et la clé privée) sur une carte à puce ou une clé USB donne la flexibilité d'accéder au magasin de certificats à partir de plusieurs ordinateurs, mais les exigences d'une interface USB disponible et la possibilité d'installer des pilotes de périphérique sur une machine donnée peuvent limiter cette flexibilité. En outre, la gestion du cycle de vie des certificats est une tâche difficile en raison des diverses combinaisons de navigateurs, de systèmes d'exploitation, de magasins de certificats et de clés et de pilotes de périphériques impliqués (en particulier, si des cartes à puces sont impliquées).

D'autres solutions plus légères consistent en une identification du navigateur par une prise d'empreinte du navigateur, en récupérant des données techniques du navigateur et en y affectant un identifiant pseudo-unique. Lorsque cet identifiant change, ou une information de contexte de navigation est modifiée (par exemple l'adresse IP, la géolocalisation IP, l'empreinte du navigateur, ...) une demande de confirmation est demandée à l'utilisateur pour valider ce nouveau navigateur et certifier que son usage est normal et respecte les règles d'usage de l'entreprise. Cette confirmation peut être demandée sous la forme d'une demande d'authentification utilisant un moyen d'authentification spécial, un moyen d'authentification plus fort, ou par une notification et une validation sur le téléphone personnel de l'utilisateur.

Les principes de captures d'empreintes des navigateurs reposent sur des mécanismes d'exécution de code dans les pages d'authentification des utilisateurs. Ce code récupère des données techniques du navigateur et en réalise une empreinte pseudo-unique. Accessoirement, un cookie chiffré ou non, est déposé dans le navigateur pour mémoriser la prise d'empreinte. Les données techniques accessibles par du code contenu dans les pages web sont assez limitées ou peuvent être limitées par des plugins du navigateur permettant de les anonymiser ou de les modifier. Les empreintes sont donc peu fiables. De plus, la technique de prise d'empreinte fonctionne très mal sur téléphone portable, il y a peu ou aucune différence d'empreinte entre deux navigateurs s'exécutant sur un téléphone de même marque, modèle et version de système d'exploitation.

Ainsi, il existe un besoin pour de nouvelles solutions d'authentification permettant l'utilisation par un utilisateur autorisé d'un navigateur sur un ordinateur ou un téléphone non géré par l'entreprise, mais dont la sécurité est jugée suffisamment sure pour être utilisé.

### Problème technique

L'invention a pour but de remédier aux inconvénients de l'art antérieur.

En particulier, l'invention a pour but de proposer un procédé d'authentification d'un utilisateur utilisant un client d'accès à internet pour accéder à des ressources distantes d'une infrastructure informatique (e.g. serveur informatique), ledit procédé permettant d'assurer l'identification du client d'accès à internet indépendamment de l'authentification de l'utilisateur tout en étant rapide et simple à mettre en œuvre. L'invention a en outre pour but de proposer un dispositif informatique d'authentification d'un utilisateur utilisant un client d'accès à internet pour accéder à des ressources distantes d'une infrastructure informatique (e.g. serveur informatique) et configuré de façon à permettre une identification du client d'accès à internet indépendamment de l'authentification de l'utilisateur.

### Brève description de l'invention

A cet effet, l'invention porte sur un procédé d'authentification d'un utilisateur utilisant un client d'accès à internet pour accéder à des ressources distantes d'une infrastructure informatique, ledit procédé comprenant :
- Une première authentification du client d'accès à internet, ladite authentification du client d'accès à internet comportant :
   ∘ Un envoi par le client d'accès à internet, à une infrastructure informatique, d'un certificat client, ledit certificat client étant associé à des informations d'identification du client d'accès à internet ; et
   ∘ Une réception par le client d'accès à internet, d'un jeton d'authentification généré par un module de sécurité à jeton lorsque le certificat client envoyé a été vérifié ;
- Une seconde authentification de l'utilisateur du client d'accès à internet, ladite authentification de l'utilisateur du client d'accès à internet comportant :
   ∘ Un envoi par le client d'accès à internet, à l'infrastructure informatique, du jeton d'authentification, de données d'identification de l'utilisateur et de données d'authentification de l'utilisateur, lesdites données d'identification et d'authentification n'étant pas comprises dans le certificat client; et
   ∘ Une réception, par le client d'accès à internet, d'une autorisation d'accès aux ressources distantes de l'infrastructure informatique lorsque le jeton d'authentification, les données d'identification de l'utilisateur et les données d'authentification de l'utilisateur ont été vérifiées.

Le procédé selon l'invention permet d'identifier le navigateur de l'utilisateur, en utilisant des mécanismes plus robustes que la prise d'empreinte dans les pages du navigateur. Ce principe doit aussi permettre l'utilisation d'un navigateur sur un ordinateur ou un téléphone non géré par l'entreprise, mais dont la sécurité est jugée suffisamment sure pour être utilisé.

L'identification du navigateur est sous le contrôle de l'utilisateur qui certifie son navigateur, ou sous le contrôle d'un administrateur qui effectue cette opération de certification de manière directe ou indirecte.

Une telle solution permet d'utiliser des postes mutualisés comme des tablettes utilisées par différents vendeurs dans un commerce ou une agence bancaire sans avoir à multiplier les certificats et en permettant une authentification distincte plus sécurisée. Chaque utilisateur dispose d'une authentification personnelle alors que la tablette dispose d'une seule identification unique.

L'identification indépendante de clients d'accès à des navigateurs peut devenir particulièrement avantageuse lorsque des identifiants valides sont volés ou usurpés. En effet, dans le cadre de la présente invention, le procédé peut comporter une étape de vérification de l'adéquation entre les données d'authentification d'un utilisateur et les données d'authentification de son navigateur. En absence de concordance, l'accès à la ressource peut être refusé car cela pourrait correspondre à un cas d'accès non autorisé à un dispositif informatique avec des identifiants volés. Cette double vérification permet de limiter encore les risques d'usurpation d'identité et les problèmes de sécurités.

**Selon d'autres caractéristiques optionnelles du procédé, ce dernier peut inclure facultativement une ou plusieurs des caractéristiques suivantes, seules ou en combinaison :**
- il comprend en outre une étape d'enrôlement du client d'accès à internet, ladite étape d'enrôlement comportant la réception par le client d'accès à internet du certificat client. Cette étape est de préférence dédiée à la certification du client d'accès à internet et plus largement du dispositif informatique qui sera utilisé pour accéder aux ressources par un utilisateur autorisé.
- si la première authentification du client d'accès à internet n'est pas réalisée avec succès, le procédé initie l'étape d'enrôlement du client d'accès à internet. Ainsi, un utilisateur pourra faire certifier le client d'accès à internet qu'il compte utiliser pour accéder aux ressources du serveur informatique ou plus largement de l'infrastructure informatique.

- il comprend en outre, avant la première authentification du client d'accès à internet, une étape d'établissement d'un canal sécurisé entre le client d'accès à internet et l'infrastructure informatique (par exemple le module de sécurité à jeton et/ou un serveur informatique hébergeant les ressources). Ainsi, les informations transitent de façon sécurisée réduisant encore les risques associés à cet accès aux ressources distantes. Alternativement, c'est l'établissement, par le client d'accès à internet, d'une session d'accès aux ressources distantes de l'infrastructure informatique qui comporte l'utilisation d'un canal de communication sécurisée avec l'infrastructure informatique.
- si la première authentification du client d'accès à internet n'est pas réalisée avec succès, l'utilisateur se voit proposer une ou plusieurs méthodes de seconde authentification de l'utilisateur du client d'accès à internet présentant un niveau de sécurité supérieur à celui de la méthode d'authentification qui lui aurait été proposé si la première authentification du client d'accès à internet avait été réalisée avec succès. Cette étape permet de s'affranchir de l'étape d'enrôlement.
- si la première authentification du client d'accès à internet n'est pas réalisée avec succès, l'utilisateur se voit refuser l'accès aux ressources distantes de l'infrastructure informatique. Cette procédure permet de sécuriser au mieux les ressources en évitant l'accès à des utilisateurs possiblement autorisés mais n'utilisant pas un dispositif informatique ayant été préalablement autorisé.
- le jeton d'authentification correspond à un code aléatoire vérifiable uniquement par l'infrastructure informatique (e.g. le module de sécurité à jeton). Alternativement, le jeton d'authentification peut être vérifié par un serveur informatique n'étant impliqué ni dans la génération du jeton d'authentification ni dans l'hébergement des ressources.
- le jeton d'authentification est associé à l'adresse IP du client d'accès à internet et le jeton d'authentification ne peut être utilisé qu'une seule fois et seulement dans un message provenant de l'adresse IP du client d'accès à internet. Cela permet de renforcer encore d'un niveau la sécurité associée à un procédé selon l'invention.
- il comporte suite à la réception de l'autorisation d'accès, l'établissement, par le client d'accès à internet, d'une session d'accès aux ressources distantes de l'infrastructure informatique. Cette session d'accès aux ressources distantes pourra être paramétrée de façon à être limitée dans le temps. Elle pourra en outre être associée à un certificat de session temporaire.
- l'infrastructure informatique comporte au moins un serveur informatique distant n'appartenant pas au même réseau local que le client d'accès à internet. Dans ces conditions, la première étape d'authentification permet d'étendre une politique de système d'information au-delà des frontières du réseau local sans avoir pour autant à mener une politique de MDMs stricte.
- Il comporte en outre une étape de vérification de la concordance entre les données d'identification d'un utilisateur et les données d'identification du client d'accès à internet utilisé par l'utilisateur et lorsque ces données ne concordent pas, l'autorisation d'accès aux ressources distantes de l'infrastructure informatique n'est pas accordée. Cette double vérification permet de limiter encore les risques d'usurpation d'identité et les problèmes de sécurités.
- les données d'identification de l'utilisateur et les données d'authentification de l'utilisateur sont renseignées par l'intermédiaire d'une interface graphique couplée au client d'accès à internet.

D'autres mises en oeuvre de cette invention comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

**Ainsi, l'invention porte en outre** sur **un programme informatique** comprenant des instructions de code de programme pour l'exécution des étapes d'un procédé selon l'invention lorsque ledit programme informatique est exécuté sur un dispositif informatique.

L'invention porte en outre sur dispositif informatique configuré pour l'authentification d'un utilisateur pour accéder à des ressources distantes d'une infrastructure informatique, ledit dispositif informatique comportant un client d'accès à internet configuré pour mettre en œuvre les étapes suivantes :
- Une première authentification du client d'accès à internet, ladite authentification du client d'accès à internet comportant :
   ∘ Un envoi à une infrastructure informatique d'un certificat client, ledit certificat client étant associé à des informations d'identification du client d'accès à internet;
   ∘ Une réception d'un jeton d'authentification généré par un module de sécurité à jeton lorsque le certificat client envoyé a été vérifié ;
- Une seconde authentification de l'utilisateur du client d'accès à internet, ladite authentification de l'utilisateur du client d'accès à internet comportant :
   ∘ Un envoi à l'infrastructure informatique du jeton d'authentification, de données d'identification de l'utilisateur et de données d'authentification de l'utilisateur, lesdites données d'identification et d'authentification n'étant pas comprises dans le certificat client;
   ∘ Une réception d'une autorisation d'accès aux ressources distantes de l'infrastructure informatique lorsque le jeton d'authentification, les données d'identification de l'utilisateur et les données d'authentification de l'utilisateur ont été vérifiées.

D'autres avantages et caractéristiques de l'invention apparaitront à la lecture de la description suivante donnée à titre d'exemple illustratif et non limitatif, en référence aux Figures annexées :
[Fig. 1] La figure 1 représente un mode de réalisation d'un procédé d'authentification d'un utilisateur selon l'invention. Les étapes encadrées par des pointillés sont facultatives.
[Fig. 2] La figure 2 représente un mode de réalisation d'une étape d'enrôlement d'un procédé d'authentification d'un utilisateur selon l'invention.
[Fig 3] La Figure 3 représente un mode de réalisation d'un procédé d'authentification d'un utilisateur selon l'invention.
[Fig 4] La Figure 4 représente un mode de réalisation d'un système sur lequel un procédé d'authentification d'un utilisateur selon l'invention peut être mis en œuvre.

Des aspects de la présente invention sont décrits en référence à des organigrammes et/ou à des schémas fonctionnels de procédés, d'appareils (systèmes) et de produits de programme informatique (ou programme d'ordinateur) selon des modes de réalisation de l'invention. Sur les figures, les organigrammes et les schémas fonctionnels illustrent l'architecture, la fonctionnalité et le fonctionnement d'implémentations possibles de systèmes, de procédés et de produits de programme informatique selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

### Description de l'invention

On entend par « client d'accès à internet » au sens de l'invention, une composante d'un modèle client-serveur à partir de laquelle l'utilisateur lance une application qui sera traitée en partie dans une autre composante du réseau informatique, le serveur. Un client est généralement constitué de logiciels d'application.

On entend par « serveur informatique » au sens de l'invention, un dispositif informatique, choisi pour organiser l'ensemble du réseau. Un serveur informatique comprend un ou plusieurs processeurs configurés pour exécuter des instructions stockées sur un support lisible par ordinateur pour effectuer diverses opérations, telles que le stockage et la gestion des informations d'identification des utilisateurs enregistrés, la génération et/ou la gestion des certificats de session pour les utilisateurs. Il gère par exemple l'accès aux ressources et aux périphériques, les connexions des différents utilisateurs. Il peut par exemple être équipé d'un logiciel de gestion réseau. Il peut également y avoir plusieurs serveurs sur un réseau.

Par « **infrastructure informatique** », on entend au sens de l'invention un ensemble de structures informatiques (i.e. dispositifs informatiques) apte à faire fonctionner une application ou une chaine applicative. La structure informatique peut être un serveur et peut par exemple être composée d'un serveur de présentation, d'un serveur métier et d'un serveur de données. L'infrastructure informatique peut également être un serveur test avec les mêmes ressources qu'un serveur de production ou bien un clone d'un serveur virtuel de production. De façon préférée, la structure informatique est un serveur ou plusieurs serveurs comme par exemple un serveur Web, un serveur d'authentification et un serveur d'identité. En outre, l'infrastructure informatique peut comporter ou être couplée à un serveur de certificats.

On entend par « **ressources** » des données, des capacités de calcul ou d'autres fonctionnalités de dispositifs informatiques ou plus spécifiquement de serveurs. Ces ressources peuvent être rendues accessibles à des dispositifs informatique tiers notamment lorsqu'ils y sont autorisés. Les ressources peuvent être qualifiées de ressources distantes lorsque le dispositif informatique souhaitant y accéder n'est pas reliée au même réseau local que les dispositifs informatique hébergeant lesdites ressources.

L'expression « **certificat client** » au sens de l'invention signifie tout document électronique utilisé pour identifier un client d'accès à internet. Cela peut notamment permettre d'associer une clef publique à ce client d'accès à internet. Ainsi, le certificat client fournit une preuve reconnue de l'identité du client d'accès à internet.

On entend par « **traiter** », « **calculer** », « **déterminer** », « **afficher** », « **extraire** » « **comparer** » ou plus largement « **opération exécutable** », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, tel qu'un ordinateur, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

On entend par « **module** » au sens de l'invention, un dispositif, un élément physique ou virtuel pouvant faire partie d'un système et pouvant posséder ses propres mécanismes interne (pilotes et périphériques etc...), capacités et fonctionnalités. Un module au sens de l'invention peut correspondre à une extension, une carte, un code, un pilote, un programme, un logiciel, un disque, un fichier, une extension, un équipement informatique, un composant ou périphérique, etc...

Dans la suite de la description, les mêmes références sont utilisées pour désigner les mêmes éléments. En outre, les différentes caractéristiques présentées et/ou revendiquées peuvent être avantageusement combinées. Leur présence dans la description ou dans des revendications dépendantes différentes, n'excluent pas cette possibilité.

Pour une authentification d'utilisateur préalablement à l'accès à des applications métiers disponibles sur le Cloud, les administrateurs d'infrastructure informatique ont le choix entre des solutions sécurisées mais lourdes et couteuses à implémenter telles que la gestion par l'entreprise grâce à un MDM (« Mobile Device Management » en terminologie anglosaxonne) et des approches PKI d'une part, ou alors des solutions plus légères mais peu fiables d'autre part.

Pour pallier cela, l'inventeur a mis en place une solution technique basée sur une identification forte d'un client d'accès à internet (e.g. un navigateur) du dispositif informatique utilisé par l'utilisateur, en utilisant des mécanismes plus robustes que la prise d'empreinte dans les pages du navigateur.

En particulier, la solution technique repose sur l'authentification d'un navigateur sur un dispositif informatique indépendamment de l'authentification de l'utilisateur. Cela permet avantageusement d'utiliser des postes mutualisés comme des tablettes utilisées par différents vendeurs dans un commerce ou une agence bancaire. Chaque utilisateur dispose d'une authentification personnelle alors que la tablette dispose d'une seule identification unique.

Ainsi, dans le cadre de l'invention et comme cela sera détaillé par la suite, lorsqu'un utilisateur tente de s'authentifier sur un serveur distant à partir d'un dispositif informatique utilisant un client d'accès à internet, avant même que l'authentification de l'utilisateur ne soit réalisée, une vérification du client d'accès à internet est réalisée. Par exemple, cela permet de s'assurer que les navigateurs et plus largement les dispositifs informatiques qu'utilisent les utilisateurs sont des dispositifs informatiques (portables, fixes ou téléphones mobiles) de l'entreprises ou disposant de moyens de sécurisation validés par l'entreprise. Par exemple, un employé d'une entreprise peut être autorisé à accéder à une application cloud depuis son ordinateur professionnel depuis chez lui, et depuis un téléphone certifié mais pas depuis son ordinateur personnel ne disposant pas d'anti-virus ou d'autre systèmes de protection à jour et donc non certifié.

Ainsi, **selon un premier aspect,** l'invention porte sur **un procédé 1 d'authentification d'un utilisateur** utilisant un client d'accès à internet 10 pour accéder à des ressources distantes d'une infrastructure informatique (e.g. un serveur informatique 20). Le procédé peut être exécuté par un dispositif informatique 11. L'invention peut être mise en œuvre sur tout dispositif informatique 11 configuré pour pouvoir accéder à des applications telles qu'une application Web, une plateforme de partage de contenu ou une plateforme de calcul.

L'invention sera décrite dans le cadre d'un dispositif informatique portable et plus particulièrement d'une tablette capable d'accéder aux ressources distantes d'un serveur informatique 20. Toutefois, l'invention ne se limite pas à ce cadre et peut trouver d'autres applications dans d'autres cadres ou même domaines. En outre, comme cela sera décrit par la suite, le client d'accès à internet 10 est configuré pour interagir avec une infrastructure informatique comportant par exemple un serveur informatique 20 comportant des ressources auxquelles un utilisateur du client d'accès à internet souhaite accéder, un module de sécurité à jetons 21, un serveur d'authentification 30, et/ou un serveur de certificats 40.

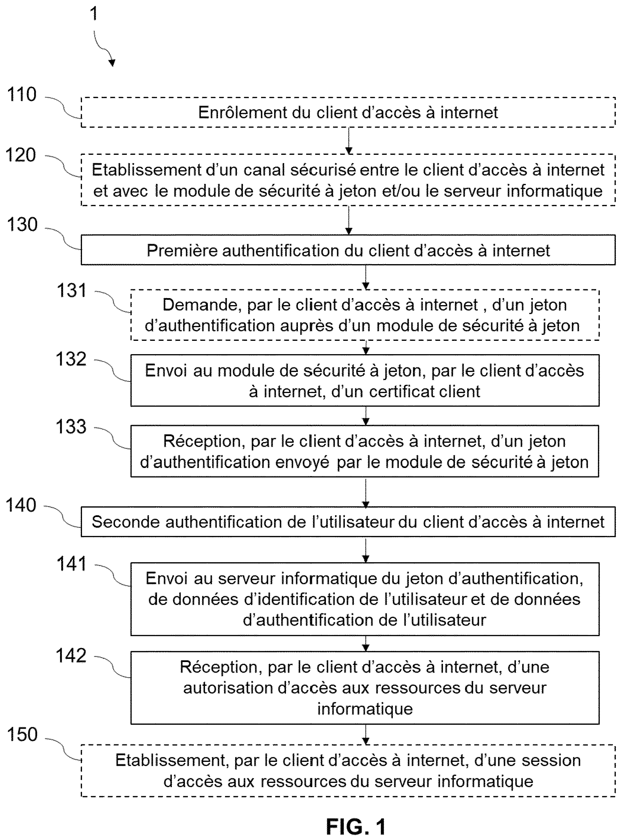

Comme cela est présenté à la **figure 1****,** le procédé selon l'invention comporte une authentification 130 du client d'accès à internet 10 puis une authentification 140 de l'utilisateur du client d'accès à internet 10.

L'authentification du client d'accès à internet est nécessaire et distincte de l'identification de l'utilisateur du client d'accès à Internet. Ainsi, le procédé permet une identification confiante d'un client d'accès à internet d'une part et une identification confiante d'un utilisateur de ce client d'accès à internet d'autre part.

En outre, comme illustré à la figure 1, le procédé selon l'invention peut également comporter :
- une étape d'enrôlement 110 du client d'accès à internet 10,
- une étape d'établissement d'un canal sécurisé 120,
- une étape d'établissement 150 d'une session d'accès aux ressources de l'infrastructure informatique.

Ainsi, le procédé d'authentification d'un utilisateur selon l'invention peut débuter par **une étape d'enrôlement 110 du client d'accès à internet 10.** Cette étape d'enrôlement 110 permet et comporte généralement la réception par le client d'accès à internet 10 du certificat client 220.

Cette étape d'enrôlement 110 peut être déclenchée automatiquement lorsqu'un utilisateur tente de s'authentifier sur l'infrastructure informatique depuis un client d'accès à internet 10 ne disposant pas d'un certificat client valide. Le client d'accès à internet 10 peut tenter de s'authentifier sur l'infrastructure informatique (e.g. sur un serveur informatique 20 ou sur un serveur d'authentification 30).

Alternativement, cette étape d'enrôlement 110 peut être déclenchée dynamiquement, par un utilisateur ou par un administrateur.

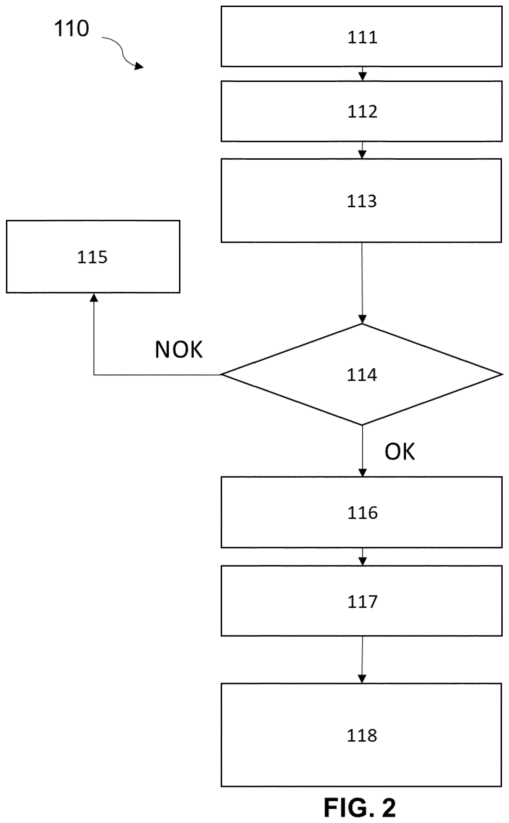

Une étape d'enrôlement 110 est par exemple détaillée à la **figure 2****.**

Comme mentionné, le client d'accès à internet 10 d'un utilisateur est redirigé vers la phase d'enrôlement lors d'une tentative d'authentification, ou volontairement lors d'un déclenchement 111 volontaire par un utilisateur ou un administrateur. La phase d'enrôlement comporte l'établissement d'une communication 112 avec l'infrastructure informatique et plus particulièrement un serveur d'authentification 30. La mise en service, par exemple, la production et la distribution, du certificat client de la session peut avoir lieu sur un canal sécurisé dans le cadre de l'authentification réseau. Cette authentification sur réseau est utilisée pour vérifier que l'utilisateur du dispositif informatique 11 est autorisé à accéder au réseau et plus particulièrement au serveur d'authentification.

Lors de l'étape d'enrôlement 110, l'utilisateur doit s'authentifier 113 avec un mécanisme d'authentification fort (i.e. respectant des règles de sécurité prédéterminées avec par exemple authentification à double facteur). La demande d'enrôlement peut ainsi déclencher un processus d'envoi de données d'authentification et de validation 114 avec confirmation par courriel, téléphone, SMS, application tierce de sécurité ou encore une validation manuelle par un administrateur.

Lors de cette étape d'enrôlement 110, l'utilisateur ou l'administrateur certifie que le dispositif informatique sur lequel sera installé le certificat client 220 est un dispositif informatique de confiance. Dans un mode de réalisation, l'utilisateur disposera d'un profil d'utilisateur administrateur, et la certification peut être implicite. Dans un autre mode de réalisation, l'utilisateur est un utilisateur déjà connu du système et dispose du droit d'enrôler un certificat client, l'utilisateur certifie la validité de sa demande d'enrôlement.

Si les données ne sont pas validées NOK, un message d'erreur peut être envoyé 115 au client d'accès à internet 10. Lorsque l'enrôlement est confirmé et validé, le serveur de certificats 40 génère 116 une paire de clés et un certificat client à envoyer au dispositif informatique 11. Le serveur de certificats 40 pourra enregistrer les informations de certification pour une traçabilité ultérieure. Par exemple, le certificat client 220 peut être un certificat X.509.

Le serveur d'authentification 30 peut enregistrer 117 l'empreinte du certificat client pour pouvoir le valider ultérieurement plus rapidement, et pour pouvoir compléter les informations de certification enregistrées pour une traçabilité.

Le certificat client 220 peut être accompagné d'une clé privée, et d'un certificat de l'autorité de certificat. Le certificat client 220 peut aussi être protégé par un mot de passe qui peut être transmis par un canal parallèle (courriel, SMS, téléphone, courriel à un autre correspondant tel qu'un administrateur...) ou lors du téléchargement. Ce mot de passe est alors nécessaire pour réaliser l'installation du certificat client. Par exemple, un certificat client 220 peut être utilisé par un client d'accès à internet 10 sur la base d'informations d'identification du client d'accès à internet qui ont été enregistrées avec le serveur de certificats 40 à un moment donné.

Généralement le dispositif informatique 11 obtient le certificat client 220 directement auprès du serveur de certificats 40. Un lien est par exemple transmis au client d'accès à internet 10. Cela peut par exemple se faire soit au cours de la navigation, ou par l'intermédiaire d'un courriel. Un lien pourra pointer vers le certificat client 220 à télécharger, ledit téléchargement pouvant nécessiter une nouvelle authentification de l'utilisateur.

Le certificat client 220 peut être installé 118 en utilisant la procédure technique spécifique à chaque type de client d'accès à internet 10. Le certificat client 220 est un fichier au format compatible avec les formats supportés par le client d'accès à internet 10. De façon préférée, l'utilisateur réalise l'enregistrement du certificat client 220 dans les conteneurs de certificats du client d'accès à internet 10. Le client d'accès à internet 10 est alors identifiable et authentifiable.

Dans ce contexte, un certificat client 220 est avantageusement un certificat numérique délivré à un client d'accès à internet 10 et pouvant être ensuite utilisé par une pluralité d'utilisateurs. Avantageusement, la clé privée du certificat est séquestrée par le client d'accès à internet 10. Cela permet de limiter sa dissémination et d'assurer que le client d'accès à internet utilisé est bien celui ayant été approuvé.

Le certificat client 220 est fixé à l'identité du client d'accès à internet 10 et est généré par le serveur de certificats 40 sur la base d'une demande par le client d'accès à internet 10 transitant de préférence par un serveur d'authentification 30 ou un module de sécurité à jetons 21. Avantageusement, une paire de clé publique / privée unique au client d'accès à internet est généré par le serveur de certificats 40 et associée au certificat client 220.

Une fois que le certificat client 220 est généré, le serveur de certificats 40 envoie le certificat client 220 et la paire de clés au module de sécurité à jetons 21 ou directement au dispositif informatique 11 sur lequel s'exécute le client d'accès à internet 10.

Le client d'accès à internet 10 stocke le certificat client 220 et au moins une clé dans la mémoire locale du dispositif informatique 11. Alternativement, le dispositif informatique 11 stocke le certificat client 220 et au moins une clé dans la mémoire locale puis après avoir reçu une requête du client d'accès à internet, le dispositif informatique 11 rend le certificat client 220 et une ou plusieurs clés disponibles pour le client d'accès à internet 10 via une API (pour «Application Programming Interface» selon une terminologie anglo-saxonne).

Le client d'accès à internet 10 peut utiliser le certificat client 220 et la clé publique pour s'authentifier à diverses entités d'un réseau. Par conséquent, le certificat client 220 peut être utilisé comme preuve du fait que le client d'accès à internet a été considéré comme un moyen sécurisé d'accéder aux ressources d'une infrastructure informatique (e.g. du serveur informatique 20).

En particulier, le certificat client 220 est valide pour une durée prédéterminée qui est indiquée dans le certificat client 220. Cette durée prédéterminée est également connue comme le temps d'expiration du certificat, ou le temps de validité du certificat, ou tout simplement comme le temps de validité.

Le procédé d'authentification d'un utilisateur selon l'invention peut comporter en outre, avant la première authentification 130, une **étape d'établissement d'un canal sécurisé 120** entre le client d'accès à internet 10 et l'infrastructure informatique. En particulier ce canal sécurisé peut être établi avec le module de sécurité à jeton 21, le serveur d'authentification 30 et/ou le serveur informatique 20.

Il peut y avoir, comme dans les procédés de l'art antérieur, une authentification serveur qui se réfère à l'identification confiante d'un serveur informatique par le client d'accès à internet 10.

Cette étape d'établissement d'un canal sécurisé 120 se fait généralement avant l'envoi des informations d'identification et d'authentification du client d'accès à internet et de l'utilisateur.

Le procédé d'authentification d'un utilisateur selon l'invention comporte **une authentification 130 du client d'accès à internet 10.** Cette authentification 130 du client d'accès à internet 10 est aussi appelée première authentification car elle vient avantageusement temporellement avant une authentification de l'utilisateur du client d'accès à internet 10.

Cette authentification 130 du client d'accès à internet 10 peut comporter une demande 131, par le client d'accès à internet 10, d'un jeton d'authentification 210.

La demande 131, d'un jeton d'authentification 210 peut en particulier être réalisée par le client d'accès à internet 10 auprès d'un module de sécurité à jeton 21. Ce module de sécurité à jeton 21 peut être hébergé par le serveur informatique 20 disposant des ressources auquel un utilisateur souhaite accéder ou encore par un serveur d'authentification 30.

Le jeton d'authentification peut correspondre à un code aléatoire vérifiable uniquement par le module de sécurité à jetons 21.

Cette authentification 130 du client d'accès à internet 10 peut comporter un envoi 132 à un serveur d'authentification d'un certificat client 220. Comme cela a été décrit, le certificat client 220 est avantageusement associé à des informations d'identification du client d'accès à internet 10. Les informations d'identification du client d'accès à internet 10 pourront par exemple correspondre au nom du client d'accès à internet, un numéro de version, des valeurs de paramétrage.

Dans un mode de réalisation, l'envoi 132 d'un certificat client 220 est réalisé par le client d'accès à internet 10, et est à destination d'un serveur d'authentification ou plus particulièrement d'un module de sécurité à jeton 21. Cet envoi peut être direct ou indirect. Ainsi, dans le cadre de l'envoi du certificat client 220 celui peut transiter par le serveur informatique 20 hébergeant les ressources auxquelles l'utilisateur du client d'accès à internet souhaite accéder.

En particulier, le client d'accès à internet 10 peut également envoyer des données relatives à ses caractéristiques. Ces données relatives à ses caractéristiques pourront par exemple correspondre au nom du client d'accès à internet, un numéro de version, des valeurs de paramétrage. Le client d'accès à internet 10 pourra également envoyer des données générées aléatoirement.

Le client d'accès à internet 10 pourra alors signer numériquement ces données (i.e. données relatives à ses caractéristiques et/ou données générées aléatoirement) et envoyer à la fois ces données signées et le certificat client 220 à l'infrastructure informatique et notamment au serveur d'authentification 30 ou au module de sécurité à jetons 21.

L'infrastructure informatique et notamment le module de sécurité à jetons 21 pourra alors utiliser des techniques de cryptographie à clef publique pour valider la signature et confirmer la validité du certificat.

En outre, l'infrastructure informatique pourra réaliser une vérification des caractéristiques du client d'accès à internet.

En comparaison avec les méthodes proposées par l'art antérieur, ici, l'infrastructure informatique (e.g. le serveur informatique 20 ou le module de sécurité à jetons 21), n'utilise pas l'authentification préalable par certificat client 220 pour authentifier l'utilisateur. L'infrastructure informatique utilise l'authentification préalable par certificat client 220 uniquement pour authentifier le client d'accès à internet 10 qui dispose du certificat client 220. En particulier, l'infrastructure informatique (e.g. le serveur informatique 20 ou le module de sécurité à jetons 21) vérifie l'authentification préalable par certificat client en utilisant les données du certificat client présentées en les comparants avec les données des certificats distribuées et connues de sa base de données.

L'infrastructure informatique peut accepter ou refuser l'authentification par certificat client en fonction de la vérification du certificat client et des données de la base de données. En l'absence de cette première authentification du client d'accès à internet 10 il ne peut y avoir authentification de l'utilisateur. En particulier, si la première authentification du client d'accès à internet 10 n'est pas réalisée avec succès, le procédé peut initier l'étape d'enrôlement 110.

L'infrastructure informatique peut modifier sa stratégie d'authentification et les méthodes d'authentification proposées à l'utilisateur en fonction de l'authentification préalable par certificat client.

Lorsque le certificat client 220 envoyé a été vérifié par le module de sécurité à jetons, la détermination de la signature numérique est validée. La détermination de la validité de la signature numérique comprend en outre, la validation du certificat numérique. En particulier, elle comporte la détermination que la signature numérique a été générée à l'aide de la clé privée correspondant à la clé publique répertoriée dans le certificat client.

L'authentification par certificat client 220 ne suffit pas à authentifier l'utilisateur mais elle est un préalable à l'authentification de l'utilisateur.

La première authentification 130 peut alors comporter une réception 133, par le client d'accès à internet 10, d'un jeton d'authentification 210 généré par le module de sécurité à jeton. De préférence, lorsque le certificat client 220 a été vérifié par le module de sécurité à jeton.

Il faut noter que cette première étape d'authentification est indépendante de l'utilisateur. Ainsi, différents utilisateurs peuvent utiliser le même logiciel présentant le même certificat client pour s'authentifier avec des méthodes d'authentification qui peuvent être différentes ou les mêmes pour chacun des utilisateurs.

Au contraire, les certificats clients tels qu'ils sont proposés aujourd'hui sont associés à des utilisateurs en particulier et ne font pas l'objet d'une vérification préalable à l'authentification d'un utilisateur.

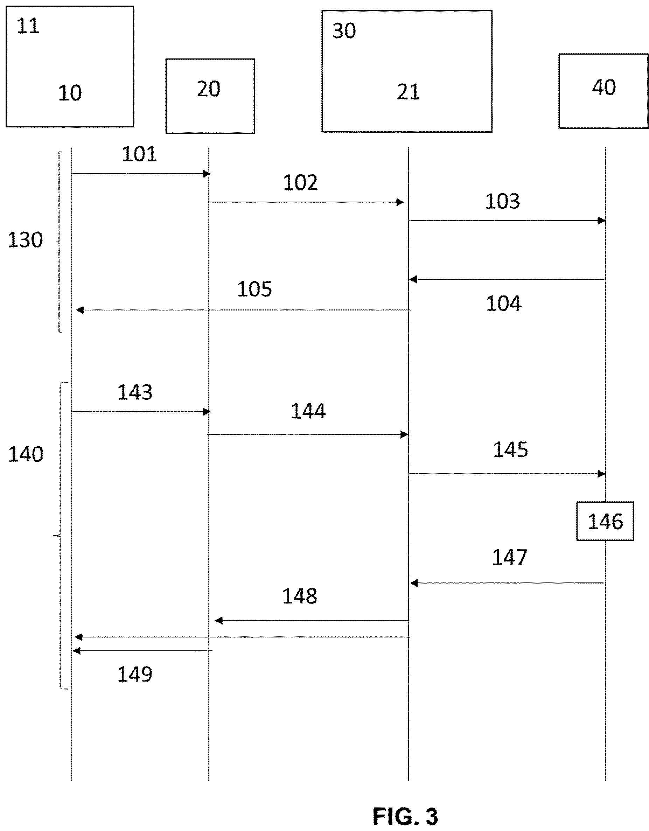

La **figure 3** illustre un mode de réalisation de la présente invention.

Dans le cadre de la présente invention, un client d'accès à internet 10 installé sur un dispositif informatique 11, telle que par exemple une tablette 11, peut être utilisé par un utilisateur pour tenter d'accéder 101 à une page HTML d'authentification d'une infrastructure informatique (serveur Web, serveur d'authentification, serveur d'identité SAML/OpenIDConnect/...).

La page HTML d'authentification en question peut comporter avantageusement un script configuré pour s'exécuter en arrière-plan et tenter d'obtenir une URL (pour « Uniform Resource Locator» en terminologie anglosaxonne). L'URL en question est protégée par une authentification par certificat. Toute tentative d'accès à cette URL va déclencher une demande 102 de négociation de certificat selon le protocole SSL/HTTPS.

Un module de sécurité à jetons 21 peut alors être configuré pour vérifier le certificat client 220 (e.g. date de validité, liste de révocation, empreinte, autorité de certification, numéro de série...) sans utiliser le contenu du certificat client 220 pour identifier et authentifier un utilisateur. Cette vérification peut être confiée à un module de sécurité à jeton 21 hébergé ou non sur le serveur informatique 20 comportant les ressources d'intérêt. Par exemple, le module de sécurité à jeton 21 peut être hébergé sur un serveur d'authentification 30.

Comme illustré sur la figure 3, le module de sécurité à jeton 21 peut envoyer 103 des données de vérification au serveur de certificats 40 puis recevoir 104 un refus ou une validation du serveur de certificats 40. En effet, le module de sécurité à jetons 21 peut déterminer à partir du certificat client 220 que le serveur de certificats 40 est l'autorité de certification qui a généré le certificat client 220. Le module de sécurité à jetons 21 peut ainsi communiquer avec le serveur de certificats 40, par exemple, sur le réseau, pour vérifier le certificat client 220. Par exemple, le certificat client 220 peut être un certificat établie selon la norme X.509, et le module de sécurité à jetons 21 requêtes 103 le serveur de certificats 40 en utilisant des messages OCSP qui est un protocole de vérification de certificat en ligne (ou « Online Certificate Status Protocole » en terminologie anglosaxonne) pour valider le certificat client 220. Ce message de requête OCSP permet de déterminer l'état de révocation, à savoir la validité, du certificat client 220. Le message de requête OCSP peut inclure le certificat client de session dans le cadre du message.

Le serveur de certificats 40 regarde la validité du certificat client 220 dans sa base de données et envoie 104 un message de réponse au module de sécurité à jetons 21 avec des informations sur si le certificat de session est valide ou si elle est non valide, par exemple, le certificat client 220 a expiré ou est révoqué.

Si le certificat client 220 est valide, le module de sécurité à jetons 21 envoie 105 un message d'acceptation à la tablette 11 indiquant qu'il accepte le certificat client 220 comme la preuve vérifiée de l'identité du dispositif client 10. Cela peut être considéré comme la fin de la première phase d'authentification 130.

Lorsque la validité du certificat client 220 est confirmé, un jeton d'authentification tok0 est transmis depuis le module de sécurité à jetons 21 au client d'accès à internet 10. Ce jeton d'authentification peut par exemple prendre la forme d'un code unique TokO calculé par le serveur informatique ou le module de sécurité à jeton. Ce code unique TokO peut alors être sauvegardé par exemple par le serveur informatique ou le module de sécurité à jeton pour une vérification future.

Cependant, si le message de réponse du serveur de certificats 40 informe que le certificat client 220 n'est pas valide, le serveur informatique 20 ou le module de sécurité à jetons 21 rejette le certificat client 220 et envoie un message à la tablette 11 pour en informer le client d'accès à internet 10. En outre, le message peut inclure une demande pour fournir des informations de vérification supplémentaire pour le client d'accès à internet 10.

En outre, le procédé selon l'invention est tel que si la première authentification n'est pas réalisée avec succès, l'utilisateur se voit proposer une ou plusieurs méthodes de seconde d'authentification plus fortes que la méthode de seconde authentification qui lui aurait été proposée si la première authentification avait été réalisée avec succès.

Alternativement, en fonction de la configuration du procédé, si la première authentification 130 n'est pas réalisée avec succès, l'utilisateur peut se voir refuser l'accès aux ressources distantes du serveur informatique 20.

Ainsi, l'utilisateur peut se voir proposer une méthode d'authentification plus forte et éventuellement plus contraignante en redirigeant la tablette 11 vers une méthode d'authentification proposée par l'infrastructure informatique. Cette méthode d'authentification est réservée aux utilisateurs utilisant des navigateurs Web non identifiés.

Avant que l'infrastructure informatique (e.g. le serveur informatique 20) permette au client d'accès à internet 10 d'accéder à ses ressources (e.g. son contenu), **une étape d'authentification 140 de l'utilisateur du client d'accès à internet 10 doit être menée.**

De façon préférée, la seconde authentification comporte un envoi 141 par le client d'accès à internet 10 du jeton d'authentification 210, de données d'identification de l'utilisateur et de données d'authentification de l'utilisateur.

Comme cela sera décrit par la suite, le jeton d'authentification 210, les données d'identification de l'utilisateur et les données d'authentification de l'utilisateur sont envoyées à l'infrastructure informatique. Cet envoi 141 est fait de préférence à destination du serveur informatique 20. Alternativement, cet envoi peut être à destination d'un autre serveur dédié à l'authentification, par exemple au serveur d'authentification 30.

En outre, avantageusement les données d'identification et d'authentification de l'utilisateur ne sont pas comprises dans le certificat client 220. Quand bien même les données d'identification et d'authentification de l'utilisateur seraient comprises dans le certificat, cette seconde étape comporte l'utilisation d'un jeton d'authentification 210 prouvant que le client d'accès à internet 10 utilisé a été indépendamment approuvé.

De façon préférée, la seconde authentification comporte également une réception 142, par le client d'accès à internet 10, d'une autorisation d'accès aux ressources distantes du serveur informatique 20. Cette autorisation est en particulier donnée lorsque le jeton d'authentification 210, les données d'identification de l'utilisateur et les données d'authentification de l'utilisateur ont été vérifiées, de préférence par l'infrastructure informatique (e.g. le serveur informatique 20, un autre serveur dédié à l'authentification ou encore le module de sécurité à jetons 21).

En particulier, il pourra être considéré que l'utilisateur est authentifié avec succès si la méthode d'authentification choisie ou imposée à l'utilisateur est réalisée avec succès et si le code aléatoire transmis durant cette authentification est vérifié avec succès par le serveur d'authentification.

Comme cela est illustré à la figure 3, en particulier, la seconde étape d'authentification 140 peut comporter l'affichage 143 d'une page d'authentification dans le client d'accès à internet 10, ladite page d'authentification pouvant comporter le code unique TokO. L'utilisateur peut alors saisir dans la page HTML d'authentification son identifiant et son mot de passe ou tout autre information d'authentification de l'utilisateur. La page d'authentification envoie 144 alors les informations d'authentification de l'utilisateur ainsi que le code TokO au module de sécurité à jetons, au serveur informatique 20 ou encore à un serveur d'authentification 30.

Le destinataire reçoit les informations de l'utilisateur et les vérifie. Le code unique TokO est vérifié 145 et l'authentification est validée si le code TokO est reconnu d'une part et si les informations d'authentification de l'utilisateur sont reconnues 146 d'autre part. La vérification peut notamment comporter une vérification et une validation 147 par le serveur de certificats 40. Dans un mode de réalisation, le code TokO ne peut être utilisé qu'une seule fois et que depuis la même adresse IP que le client d'accès à internet 10.

Le module de sécurité à jetons 21 ou le serveur d'authentification 30 envoie 148, 149 un message au dispositif informatique 10 et/ou au serveur informatique 20 accordant une autorisation d'accès.

Cette méthode d'authentification 140 de l'utilisateur est de préférence indépendante de l'authentification du client d'accès à internet réalisée par certificat client. C'est-à-dire que, de préférence, l'authentification de l'utilisateur est réalisée au moyen d'information ne provenant pas du certificat client.

L'authentification pourra par exemple reposer sur l'utilisation d'un identifiant et d'un mot de passe. Par exemple, le serveur informatique 20 ou un autre serveur pourra demander à un utilisateur de fournir un nom et un mot de passe avant de donner des droits d'accès à certaines parties du serveur informatique 20. Le serveur informatique 20 maintient directement ou indirectement une liste des identifiants et des mots de passe ; si un identifiant particulier est dans cette liste, et que l'utilisateur fournit le bon mot de passe, le serveur donne des droits d'accès.

Les données d'identification de l'utilisateur et les données d'authentification de l'utilisateur sont renseignées par l'intermédiaire d'une interface graphique couplée au client d'accès à internet 10.

L'authentification pourra également être basée sur un code envoyé par SMS ou via une application dédiée, par PKI contenue sur une carte à puce, une clé USB ou via un autre certificat dédié à l'utilisateur.

Généralement, et comme cela a été mentionné, le client d'accès à internet 10 envoie les données d'authentification de l'utilisateur par le réseau, en clair ou de préférence par une connexion SSL chiffrée.

Par exemple, le procédé comporte suite à la réception de l'autorisation d'accès, l'établissement 150 d'une session d'accès aux ressources distantes du serveur informatique 20. De préférence cet établissement est mis en oeuvre par le client d'accès à internet.

Ainsi, l'étape d'établissement 150 d'une session d'accès aux ressources distantes du serveur informatique peut comporter l'utilisation d'un canal de communication sécurisée avec le serveur informatique. Cette communication sécurisée permet alors au client d'accès à Internet l'accès à une ou plusieurs ressources distantes du serveur informatique 20. L'accès aux ressources distantes se fait donc de manière fiable et sécurisée tout en étant maîtrisée.

En outre, de façon particulièrement avantageuse, le serveur informatique 20 peut être un serveur informatique distant n'appartenant pas au même réseau local que le client d'accès à internet 10. Ainsi, l'accès à un serveur informatique 20 par un utilisateur peut être réalisée depuis n'importe où. La sécurité du serveur informatique étant alors assurée de par la première authentification du client d'accès à Internet et par la seconde authentification de l'utilisateur du client d'accès à Internet.

Ainsi, l'étape d'établissement 150 d'une session d'accès aux ressources distantes de l'infrastructure informatique peut être réalisée par l'utilisation d'un canal de communication sécurisée entre le client d'accès Internet et une infrastructure informatique distante.

Comme décrit, les modes de réalisation présentés ici fournissent des techniques pour authentifier un utilisateur demandant l'accès à une application basée sur le cloud ou hébergée. Dans le cadre du processus d'authentification, une application de type client d'accès à internet est soumise à un défi d'authentification basée sur un certificat et des clés préalablement attribuées. C'est seulement après une authentification validée de l'application qu'un utilisateur pourra, au travers de l'application authentifiée, se connecter, grâce à une seconde authentification, aux ressources distantes de l'infrastructure informatique. Avantageusement, cette approche ne nécessite pas qu'un dispositif informatique dispose d'un ensemble correct de pilotes de périphériques pour un jeton matériel ou qu'il installe une copie d'une clé privée pour chaque utilisateur au travers de ce dispositif pour accéder à des ressources distantes. En conséquence, les modes de réalisation fournissent un processus d'authentification qui permet aux utilisateurs d'accéder aux applications hébergées de façon sécurisée dans les cas où les utilisateurs n'utilisent pas un matériel de l'entreprise leur étant exclusivement dédié.

Bien que ce qui précède concerne des modes de réalisation de la présente invention, d'autres modes de réalisation de l'invention peuvent être conçus sans s'écarter de sa portée de base, et sa portée est déterminée par les revendications qui suivent.

Comme cela sera apprécié par l'homme de l'art, des aspects de la présente invention peuvent être réalisés en tant que dispositif, système, procédé ou produit de programme d'ordinateur (i.e. programme informatique). En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

En particulier, les étapes du procédé d'authentification selon l'invention décrit précédemment peuvent prendre la forme d'un programme informatique.

Ainsi, **selon un autre aspect,** l'invention porte sur **un programme informatique** (e.g. un programme d'ordinateur) comprenant des instructions de code de programme pour l'exécution des étapes d'un procédé selon l'invention lorsque ledit programme informatique est exécuté sur un dispositif informatique tel qu'un ordinateur. Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur l'ordinateur d'un utilisateur, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en œuvre l'invention.

De même, l'invention porte sur un **support informatique** sur lequel est mémorisé un programme informatique selon l'invention. Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

**Selon un autre aspect,** l'invention porte sur un **dispositif informatique** configuré pour l'authentification d'un utilisateur pour accéder à des ressources distantes d'une infrastructure informatique.

Le dispositif informatique 11 peut être une tablette, un ordinateur portable, un ordinateur de bureau, un téléphone intelligent, un lecteur de livre électronique, un lecteur de musique ou tout autre dispositif informatique portable ou stationnaire approprié. Le dispositif informatique 11 peut comprendre un ou plusieurs processeurs configurés pour exécuter des instructions stockées par un support lisible par ordinateur pour effectuer diverses opérations client, telles que les entrées / sorties, la communication, le traitement des données, etc. Le dispositif informatique 11 comprend une ou plusieurs interfaces réseau à travers lesquelles il peut établir des connexions sans fil ou câblées à un ou plusieurs réseaux, tels que le réseau internet. Le dispositif informatique exécute également des applications, par exemple, un client d'accès à internet 10 tel qu'un navigateur Web, à l'aide desquelles le dispositif informatique 11 peut établir des sessions réseau avec divers serveurs informatiques 20.

Le dispositif informatique 11 selon l'invention comporte en particulier un client d'accès à internet 10 configuré pour mettre en œuvre une ou plusieurs étapes du procédé selon l'invention.

Un client d'accès à internet 10 sera en particulier une application configurée pour accéder à internet ou plus largement à un réseau de communication. Le client d'accès à internet pourra en particulier être configuré pour envoyer des requêtes à un ou plusieurs serveurs informatiques et recevoir des réponses. Le client d'accès à internet 10 pourra en outre disposer d'une interface de communication avec un utilisateur, de préférence une interface homme machine qui sera graphique. Un client d'accès à internet pourra par exemple être un navigateur web, un client dédié au contact d'un ou de plusieurs serveurs informatiques spécifiques.

Un client d'accès à internet 10 pourra être codé en différents langages informatiques. Il sera notamment configuré, notamment au travers de ce code informatique, pour mettre en œuvre une première authentification 130 du client d'accès à internet 10 et une seconde authentification 140 de l'utilisateur du client d'accès à internet.

Le première authentification pourra comporter les différents modes de réalisation décrits précédemment et pourra notamment comporter: un envoi 132 au module de sécurité à jeton 21 d'un certificat client 220, ledit certificat client 220 étant associé à des informations d'identification du client d'accès à internet 10 ; et une réception 133, par le client d'accès à internet 10, d'un jeton d'authentification 210 généré par le module de sécurité à jeton lorsque le certificat client 220 envoyé a été vérifié.

La seconde authentification 140 de l'utilisateur du client d'accès à internet 10 pourra comporter les différents modes de réalisation décrits précédemment et pourra notamment comporter: un envoi 141 au serveur informatique 20 du jeton d'authentification 210, de données d'identification de l'utilisateur et de données d'authentification de l'utilisateur, lesdites données d'identification et d'authentification n'étant pas comprises dans le certificat client 220 ; et une réception 142 d'une autorisation d'accès aux ressources distantes du serveur informatique 20 lorsque le jeton d'authentification 210, les données d'identification de l'utilisateur et les données d'authentification de l'utilisateur ont été vérifiées.

L'invention porte également sur un **système d'authentification** 2 comportant un dispositif informatique 11 d'authentification selon l'invention et une infrastructure informatique (e.g. serveur informatique 20) hébergeant des ressources 22 auxquelles un utilisateur du dispositif informatique 11 souhaite accéder. Comme cela a été évoqué, le système d'authentification 2 peut également comporter un serveur d'authentification 30 et/ou un serveur de certificats 40. En outre, le système pourra avantageusement comporter un module de sécurité à jetons 21.

Le module de sécurité à jetons 21 pourra par exemple être hébergé par le serveur informatique 20 hébergeant les ressources d'intérêt ou par un serveur d'authentification 30.

Pour cela, il pourra directement ou indirectement (e.g. en confiant la vérification au serveur d'authentification) vérifier les informations d'identification de l'utilisateur reçu du dispositif informatique 11.

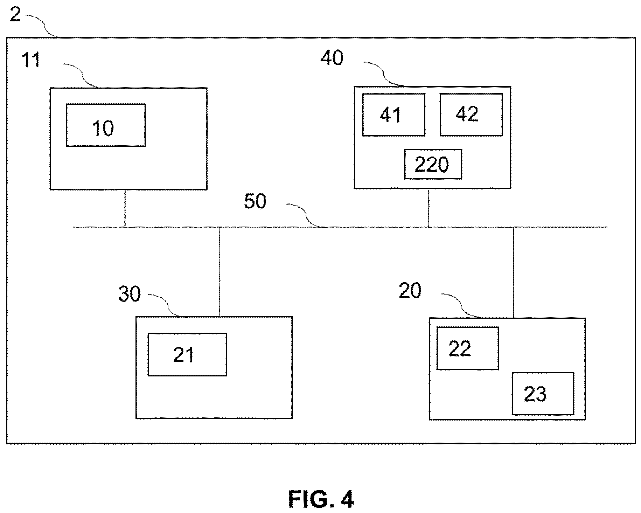

Un serveur informatique est un serveur qui est configuré pour héberger un site Web accessible par des dispositifs clients par l'intermédiaire d'un réseau. Bien qu'un seul serveur informatique 20 soit représenté sur la Figure 4, le système peut comprendre une pluralité de serveurs Web qui sont accessibles par des dispositifs client via un réseau. Un dispositif client, tel qu'un dispositif informatique 11 selon l'invention, peut accéder aux ressources hébergées par le serveur informatique 20 en établissant une connexion HTTP via le réseau. Dans certaines implémentations, le serveur informatique 20 ne permet que des connexions sécurisées 50 de périphériques clients pour accéder aux ressources hébergées par le serveur informatique 20. Dans ce cas, un dispositif informatique 11 pourra accéder aux ressources hébergées par le serveur informatique 20 en établissant une liaison sécurisée en utilisant, par exemple, un protocole de sécurité TLS (« Transport Layer Security » en terminologie anglosaxonne) ou SSL (« Secure Socket Layer » en terminologie anglosaxonne).

Le serveur informatique 20 peut être implémenté sur un ou plusieurs serveurs 23 qui exécutent collectivement des fonctions d'authentification, d'autorisation d'accès et d'hébergement des ressources dans le cadre de la présente invention. Ainsi, une même infrastructure informatique peut soutenir les serveurs informatiques qui hébergent les données d'intérêt et ceux en charge de l'authentification ou encore de la distribution des certificats.

Le serveur de certificats 40 peut avantageusement être configuré pour générer les certificats client 220. Par exemple, il peut disposer de méthodes d'authentifications dédiés à l'enrôlement des certificats, incluant des moyens d'identification et de vérification des utilisateurs par des moyens directs tels que la vérification d'identifiant et de mot de passe, d'envoi de code par SMS, d'envoi de code par mail, ou de vérification de l'identité de l'utilisateur en utilisant un tiers de confiance tel qu'un collègue ou une personne connue de l'utilisateur ou tout autre moyen.

En outre, il peut disposer d'une base de données 41 contenant les informations des certificats et des moyens de vérifier les certificats distribués et de les associer au client d'accès à internet 10.

De façon préférée, le serveur de certificats 40 peut disposer d'un journal 42 contenant les identités des utilisateurs et les opérations d'enrôlement des logiciels clients réalisés par les utilisateurs.

Il peut aussi disposer d'une base de données des utilisateurs disposants de droits élevés et autorisés à enrôler des certificats.

## Revendications

1. Procédé d'authentification d'un utilisateur utilisant un client d'accès à internet (10) pour accéder à des ressources distantes d'une infrastructure informatique, ledit procédé comprenant :
- une étape d'enrôlement (110) dudit client d'accès à internet (10), ladite étape d'enrôlement (110) comportant la réception, par le client d'accès à internet, (10) d'un certificat client (220), associé à des informations d'identification dudit client d'accès à internet (10), et généré par un serveur de certificats (40) ;
- une première authentification (130) du client d'accès à internet (10), ladite authentification (130) du client d'accès à internet (10) comportant :
∘ un envoi (132) par le client d'accès à internet (10) à une infrastructure informatique d'un certificat client (220), ledit certificat client (220) étant associé à des informations d'identification du client d'accès à internet (10) ;
∘une réception (133) par le client d'accès à internet (10), d'un jeton d'authentification (210) généré par un module de sécurité à jeton (21) lorsque le certificat client (220) envoyé a été vérifié ;
- une seconde authentification (140) de l'utilisateur du client d'accès à internet (10), ladite authentification (140) de l'utilisateur du client d'accès à internet (10) comportant :
oun envoi (141) par le client d'accès à internet (10), à l'infrastructure informatique, du jeton d'authentification (210), de données d'identification de l'utilisateur et de données d'authentification de l'utilisateur, lesdites données d'identification et d'authentification n'étant pas comprises dans le certificat client (220) ; et
∘une réception (142), par le client d'accès à internet (10), d'une autorisation d'accès à des ressources distantes de l'infrastructure informatique (20) lorsque le jeton d'authentification (210), les données d'identification de l'utilisateur et les données d'authentification de l'utilisateur ont été vérifiées.

2. Procédé d'authentification d'un utilisateur selon la revendication précédente, **caractérisée en ce que**, si la première authentification (130) du client d'accès à internet (10) n'est pas réalisée avec succès, le procédé initie l'étape d'enrôlement (110) du client d'accès à internet (10).

3. Procédé d'authentification d'un utilisateur selon l'une quelconque des revendications précédentes, **caractérisée en ce qu'**il comprend en outre, avant la première authentification (130) du client d'accès à internet (10), une étape d'établissement d'un canal sécurisé (120) entre le client d'accès à internet (10) et l'infrastructure informatique.

4. Procédé d'authentification d'un utilisateur selon l'une quelconque des revendications précédentes, **caractérisée en ce que** si la première authentification (130) du client d'accès à internet (10) n'est pas réalisée avec succès, l'utilisateur se voit proposer une ou plusieurs méthodes de seconde authentification (140) de l'utilisateur du client d'accès à internet (10) présentant un niveau de sécurité supérieur à celui de la méthode d'authentification qui lui aurait été proposé si la première authentification (130) du client d'accès à internet (10) avait été réalisée avec succès.

5. Procédé d'authentification d'un utilisateur selon l'une quelconque des revendications précédentes, **caractérisée en ce que** si la première authentification (130) du client d'accès à internet (10) n'est pas réalisée avec succès, l'utilisateur se voit refuser l'accès aux ressources distantes de l'infrastructure informatique.

6. Procédé d'authentification d'un utilisateur selon l'une quelconque des revendications précédentes, **caractérisée en ce que** le jeton d'authentification (210) correspond à un code aléatoire vérifiable uniquement par l'infrastructure informatique.

7. Procédé d'authentification d'un utilisateur selon l'une quelconque des revendications précédentes, **caractérisé en ce qu'**il comporte suite à la réception de l'autorisation d'accès, l'établissement (150), par le client d'accès à internet (10), d'une session d'accès aux ressources distantes de l'infrastructure informatique.

8. Procédé d'authentification d'un utilisateur selon l'une quelconque des revendications précédentes, **caractérisé en ce que** l'infrastructure informatique comporte au moins un serveur informatique (20) distant n'appartenant pas au même réseau local que le client d'accès à internet (10).

9. Procédé d'authentification d'un utilisateur selon l'une quelconque des revendications précédentes, **caractérisé en ce qu'**il comporte en outre une étape de vérification de la concordance entre les données d'identification d'un utilisateur et les données d'identification du client d'accès à internet utilisé par l'utilisateur et lorsque ces données ne concordent pas, l'autorisation d'accès aux ressources distantes de l'infrastructure informatique n'est pas accordée.

10. Programme informatique comprenant des instructions de code de programme pour l'exécution des étapes d'un procédé selon l'une quelconque des revendications 1 à 9 lorsque ledit programme informatique est exécuté sur un dispositif informatique.

11. Dispositif informatique configuré pour l'authentification d'un utilisateur pour accéder à des ressources distantes d'une infrastructure informatique, ledit dispositif informatique comportant un client d'accès à internet (10) configuré pour mettre en œuvre toutes les étapes suivantes du procédé selon l'une quelconque des revendications précédentes.
